(19) Europäisches Patentamt
European Patent Office
Office européen des brevets

(11) **EP 4 160 101 A1**

(12) **EUROPEAN PATENT APPLICATION**

(43) Date of publication:
**05.04.2023 Bulletin 2023/14**

(21) Application number: **21199806.7**

(22) Date of filing: **29.09.2021**

(51) International Patent Classification (IPC):
*F24F 11/00* (2006.01)    *F24F 11/77* (2018.01)
*F24F 11/36* (2018.01)    *F24F 1/0003* (2019.01)
*F24F 12/00* (2006.01)

(52) Cooperative Patent Classification (CPC):
**F24F 12/006; F24F 1/0003; F24F 11/0001;
F24F 11/36; F24F 11/77**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Daikin Europe N.V.
8400 Oostende (BE)**

(72) Inventors:
• **Bruggeman, An-Sofie**
  **8400 Oostende (BE)**
• **Singhvi, Abhishek**
  **8400 Oostende (BE)**
• **Vanooteghem, Jan**
  **8400 Oostende (BE)**
• **Pillu, Thomas**
  **8400 Oostende (BE)**

(74) Representative: **Hoffmann Eitle
Patent- und Rechtsanwälte PartmbB
Arabellastraße 30
81925 München (DE)**

(54) **A VENTILATION SYSTEM FOR A ROOM**

(57)    The present disclosure relates to a ventilation system for a room, the ventilation system comprising a first air passage (20) having a first air inlet (22) and a first air outlet (24); a first fan (26) configured to induce a first air flow from the first air inlet (22) through the first air passage (20) to the first air outlet (24), the first fan (26) having a first fan motor (28); and a controller (40) for controlling the ventilation system; wherein the controller (40) is configured to execute a safety operation i) when the first fan motor (28) is in an ON state and/or ii) when the controller (40) receives a signal indicating that a refrigerant leakage has been detected, wherein the controller (40) is configured to, in the safety operation, a) obtain, of the first fan motor (28), the electrical power and/or the electrical current and/or the electrical resistance during operation of the first fan motor (28) at a predetermined revolution speed or a predetermined DC voltage of the first fan motor (28); b) compare the obtained electrical power and/or the electrical current and/or the electrical resistance of the first fan motor (28) with a first threshold, wherein the first threshold is a predetermined threshold associated to a set minimum first air flow rate through the first air passage (20); c) initiate a measure when the obtained electrical power and/or the electrical current and/or the electrical resistance of the first fan motor (28) falls below the first threshold.

Fig. 4

## Description

### Technical Field

The present disclosure relates to a ventilation system or ventilation unit for a room. In particular, the ventilation system may be embodied together with a heat pump. For example, the ventilation system may be part of a VAC (Ventilation Air Conditioning) system or a HVAC (Heating Ventilation Air Conditioning) system.

### Background

Safety of electric heat pumps is an important issue and regulated by a plurality of international standards. This particularly applies to heat pumps embodying flammable refrigerants (i.e. refrigerant classified as class A2L, A2 or A3 according to ISO 817), in particular A2L refrigerants such as R32. Leakage of flammable refrigerants into a room (indoor space) is a fire hazard and may even lead to hazards caused by explosive atmosphere in the room.

To increase safety of those heat pumps it may be required to ensure a certain ventilation of the room, be it circulation ventilation or mechanical ventilation. In this context, circulation ventilation is to be understood as circulating the air in the room or introducing air from the outside into the room so that potentially leaking refrigerant is mixed and diluted within the room to reduce or even avoid the risks associated therewith. Mechanical ventilation to the contrary is to be understood as extracting or withdrawing air from the room to the outside of the room, preferably outdoors. Hence, potentially leaking refrigerant is also extracted or withdrawn together with the air from the room to reduce or even avoid the risks associated with the leaking refrigerant.

During use of the ventilation system the actual air flow rate may decrease.

This can for example happen if a filter incorporated into the ventilation system gets contaminated during use.

Another case in which the air flow rate may decrease is if a heat exchanger disposed in the air flow passage gets wet or contaminated (clogged) during use. In this context, the heat exchanger may be a ventilation heat exchanger exchanging heat between fresh air and return air or, if incorporated into the ventilation system, an air conditioning heat exchanger exchanging heat between the fresh air and a refrigerant.

Also, internal leakage in the ducting forming the air flow passage may lead to a reduction of the actual air flow.

Last but not least, the temperature of the air may have an influence changing the density of the air and, thereby, the actual air flow rate.

Nevertheless, a certain minimum air flow rate needs to be maintained under such conditions to minimize risks associated with leaking flammable refrigerants and to comply with international standards.

### Summary

The object of the present disclosure is to provide a ventilation system that enables to increase the safety of heat pumps, particularly those embodying a flammable refrigerant, ensuring that a predetermined minimum air flow rate is maintained during operation of the ventilation system.

This object may according to the present disclosure be attained by the features defined in claim 1. Further embodiments of the ventilation system are defined in the dependent claims.

The basic idea of the present disclosure is to conclude on the actual air flow realized by the ventilation system via parameters of the fan motor of the ventilation fan (particularly the electrical current, power or resistance of the fan motor) and if the actual air flow drops below a predetermined minimum air flow initiate a countermeasure or safety measure.

According to a first aspect, a ventilation system for a room comprises a first air passage having a first air inlet (22) and a first air outlet. Further, a first fan is provided and configured to induce a first air flow from the first air inlet (22) through the first air passage to the first air outlet. The first fan has a first fan motor. The ventilation system further has a controller for controlling the ventilation system and configured to execute a safety operation. There are basically two scenarios in which the safety operation has to be executed.

In the first scenario, the ventilation system is operating, and the first fan motor is ON (ON state). During this first scenario, the primary aim is to maintain a required minimum air flow through the first air passage.

In the second scenario, the first fan motor is OFF (OFF state) and a refrigerant leakage has been detected. In this context, the refrigerant leakage may have been detected in the room. In the second scenario, the first fan motor will be switched ON (ON state) and subsequently, a required minimum air flow through the first air passage will have to be maintained to ensure safety.

Thus, the controller is configured to perform the safety operation (normal safety operation) when the first fan motor is in an ON state and/or when the controller receives a signal indicating that a refrigerant leakage has been detected.

During the safety operation, the controller is configured to obtain, of the first fan motor, the electrical power and/or the electrical current and/or the electrical resistance during operation of the first fan motor (ON state) at a predetermined revolution speed (rpm) or a predetermined DC voltage of the first fan motor. In this context, the predetermined revolution speed (RPM) or predetermined DC voltage of the first fan motor may depend on a respective ventilation mode selected by the user. The modii may include "Low", "Medium" and "High" or just two of these modii. Thus, "predetermined" may also be understood as "specific", "current" or "actual". Subsequently, the obtained electrical power and/or the electrical current and/or the electrical resistance of the first fan motor is compared with a first threshold, wherein the first threshold is a predetermined threshold associated to a set minimum first air flow rate through the first air passage. When (if) the obtained electrical power and/or the electrical current and/or the electrical resistance of the first fan motor falls (drops) below the first threshold, the controller is configured to initiate a measure (countermeasure or first safety measure).

Due to the safety operation, a certain minimum air flow rate through the first air passage may be ensured or at least be monitored. The minimum air flow rate minimizes the risk of fire hazards or hazards caused by explosive atmosphere in the room due to leaking refrigerant being either sufficiently diluted by the first air flow or being extracted or withdrawn from the room together with the first air flow.

In a broad sense, the first air flow may in claim 1 be an air flow into the room also referred to as fresh air flow (circulation ventilation) or an air flow out of the room also referred to as return air flow (mechanical ventilation). Later, the first air flow will be defined as being the fresh air flow and a second air flow (see claim 5) as being the return air flow. In this connection, "Circulation airflow" may be considered as mechanically induced airflow movement within the room or duct connected rooms. It can also be understood as air circulated to the conditioned room. "Mechanical ventilation" occurs when the appliance enclosure or the room is provided with a ventilating system that, in the event of a refrigerant leak, is intended to vent the refrigerant into an area where there is not a potential ignition source (e.g.: outdoors) and the refrigerant gas can be readily dispersed. It can also be understood as the air that is removed from the conditioned room and discharged outdoors.

According to a second aspect, the measure (countermeasure or first safety measure) comprises increasing the revolution speed or the DC voltage so that the obtained electrical power and/or the electrical current and/or the electrical resistance of the first fan motor exceeds the first threshold.

Because of this measure, it can be assured that the desired minimum air flow rate can still be maintained even if e.g. the ESP (External Static Pressure) increases during operation. As a result, risks encountered when a refrigerant leakage occurs are minimized.

According to a third aspect, the minimum first air flow rate of the first air flow is at least 240 $m^3/h$. In other words, the minimum first air flow rate to be achieved is 240 $m^3/h$ or more. In one example, the minimum first air flow rate to be achieved is 260 $m^3/h$ or more. In another example, the minimum first air flow rate to be achieved is 270 $m^3/h$ or more. In this context, a minimum circulation airflow of 240 $m^3/h$ is required by GG.10.2.1 of IEC 60335-2-40. Yet, a margin above said air flow rate may be appropriate depending on the circumstances as will be explained in the detailed description. The minimum first air flow rate may be less than 300 $m^3/h$ or less than 290 $m^3/h$ or less than 280 $m^3/h$.

Consequently, it can reliably be achieved that the risks of a fire hazard and/or a hazard due to an explosive atmosphere in the room because of a relatively high concentration of leaking refrigerant is minimized.

According to a fourth aspect, a third threshold higher than the first threshold is set and the controller is further configured to output a warning to the user when the obtained electrical power and/or the electrical current and/or the electrical resistance of the first fan motor falls below the third threshold.

Consequently, one may ensure that the user is informed of the reduced airflow rate approaching the minimum required airflow rate so that the user can initiate countermeasures, such as cleaning filters, ducting and/or heat exchangers (ventilation heat exchanger and/or air conditioning heat exchanger, if incorporated into the ventilation system) or against potential air leakage in the ducting.

According to a fifth aspect, the ventilation system further comprises a second air passage having a second air inlet and a second air outlet. Further, the ventilation system comprises a second fan configured to induce a second air flow from the second air inlet through the second air passage to the second air outlet. The second fan has a second fan motor. Furthermore, the controller is further configured to execute the safety operation when the second fan motor is in an ON state. The controller is configured to, in the safety operation, also obtain, of the second fan motor, the electrical power and/or the electrical current and/or the electrical resistance during operation of the second fan motor at a predetermined revolution speed or a predetermined DC voltage of the second fan motor. In this context, the predetermined revolution speed (RPM) or predetermined DC voltage of the second fan motor may depend on a respective ventilation mode selected by the user. The modii may include "Low", "Medium" and "High" or just two of these modii. Thus, "predetermined" may also be understood as "specific", "current" or "actual". Subsequently, the obtained electrical power and/or the electrical current and/or the electrical resistance of the second fan motor is compared with a second threshold, wherein the second threshold is a predetermined threshold associated to a set minimum second air flow rate through the second air passage. When (if) the obtained electrical power and/or the electrical current and/or the electrical resistance of the second fan motor falls (drops) below the second threshold, a (the) measure (countermeasure or first safety measure) is initiated.

Thus, the ventilation system is capable of both, realizing a circulation ventilation and mechanical ventilation within the room. As a result, one may not only achieve sufficient mixture (dilution) of potentially leaking refrigerant within the room due to circulation ventilation, but also exhaustion of air mixed with potentially leaking refrigerant to the outside of the room, preferably outdoors.

According to a sixth aspect, the measure (countermeasure or first safety measure) comprises increasing the revolution speed or the DC voltage of the second fan motor so that the obtained electrical power and/or the electrical current and/or the electrical resistance of the second fan motor exceeds the second threshold.

Because of this measure, it can be assured that the desired minimum air flow rate can still be maintained if e.g. the ESP (External Static Pressure) increases during operation. As a result, risks encountered when a refrigerant leakage occurs are minimized.

According to a seventh aspect, the minimum second air flow rate of the second air flow is at least 130 m$^3$/h. In other words, the minimum second air flow rate to be achieved is 130 m$^3$/h or more. In one example, the minimum second air flow rate to be achieved is 160 m$^3$/h or more. In another example, the minimum second air flow rate to be achieved is 180 m$^3$/h or more or 200 m$^3$/h or more. The minimum first air flow rate may be less than 280 m$^3$/h or less than 265 m$^3$/h or less than 220 m$^3$/h. According to an embodiment, the minimum second air flow rate Q is calculated by the formula (GG.31 of IEC 60335-2-40):

$$Q = \frac{10}{0{,}25 \times LFL}$$

wherein LFL is the lower flammability limit in kg/m$^3$. For R32 the LFL is 0.307 kg/m$^3$. Thus, the minimum second air flow rate Q may be at least 130 m$^3$/h, when using R32 as refrigerant. Yet, a margin above said air flow rate may be appropriate depending on the circumstances as will be explained in the detailed description.

As a result, it can be reliably achieved that the risks of a fire hazard and or a hazard due to an explosive atmosphere in the room because of a relatively high concentration of leaking refrigerant is minimized.

According to an eighth aspect, a fourth threshold higher than the second threshold is set and the controller is further configured to output a warning to the user when the obtained electrical power and/or the electrical current and/or the electrical resistance of the second fan motor falls below the fourth threshold.

Consequently, one may ensure that the user is informed of the reduced airflow rate approaching the minimum required airflow rate so that the user can initiate countermeasures, such as cleaning of filters, ducting and/or heat exchangers (ventilation heat exchanger and/or air conditioning heat exchanger, if incorporated into the ventilation system) or against potential air leakage in the ducting.

According to a ninth aspect, the measure (countermeasure or first safety measure) comprises outputting an error signal to a user.

Particularly in cases in which the maximum rotational speed of the respective first and/or second fan is already reached and the measure of increasing the rotational speed is no longer available, it is necessary to readily inform the user. This is realized in accordance with the ninth aspect by outputting the error signal in this case.

According to a tenth aspect, the ventilation system further comprises an air conditioning heat exchanger connected to a refrigerant circuit of a heat pump and configured to exchange heat between the refrigerant and air to be supplied to the room and a refrigerant leakage detection sensor arranged in the vicinity of the air conditioning heat exchanger, the refrigerant leakage detection sensor being configured to detect refrigerant leaking from the refrigerant circuit and outputting the signal indicating that a refrigerant leakage has been detected.

According to another embodiment, the air conditioning heat exchanger is integrated in a ventilation unit of the ventilation system, that is within the first airflow passage between the first air inlet and first air outlet, preferably downstream of a ventilation heat exchanger described later (see claim 14).

Alternatively, the air conditioning heat exchanger may also be integrated in a ducting between the first air outlet and an inlet connecting the first outlet to the room and through which the first airflow is supplied into the room.

According to another embodiment, the air conditioning heat exchanger may be part of a separately provided air conditioning system and be part of an indoor unit positioned within the room.

In either one of these embodiments, the refrigerant leakage detection sensor is positioned in the vicinity (close to or adjacent) the air conditioning heat exchanger. Thus, a potential refrigerant leak may readily be detected.

According to an eleventh aspect, the first air flow is a fresh air flow and the second air flow is a return air flow, wherein the air conditioning heat exchanger is connected to the first air passage and configured to exchange heat between the refrigerant and the fresh air flow as air to be supplied to the room. This corresponds to the cases in which the air conditioning heat exchanger is integrated into the ventilation system, i.e. either the ventilation unit or the ducting of the ventilation system as described above.

Thus, the first airflow realizes a circulation ventilation, whereas the second airflow realizes mechanical ventilation. As a result, one may not only achieve sufficient mixture (dilution) of potentially leaking refrigerant within the room due to circulation ventilation, but also exhaustion of air mixed with potentially leaking refrigerant to the outside of the room, preferably outdoors.

According to a twelfth aspect, the controller is further configured to, if the first fan motor and/or the second fan motor are/is in an OFF state, start the first and/or the second fan motor (switch the first and/or the second fan motor to the ON state) upon receiving the signal indicating that a refrigerant leakage has been detected and then execute the safety operation. In this aspect, the first fan and/or the second fan may be operated at the predetermined revolution speed (rpm) or predetermined DC voltage at which the first fan and the second fan were respectively operated at the time of switching it OFF, which is stored in the controller.

Consequently, as soon as a refrigerant leak is detected, the first fan and/or the second fan is/are switched ON so as to realize at least a minimum circulation ventilation and/or mechanical ventilation and, thereby, reduce the risks of a fire hazard and/or a hazard due to an explosive atmosphere in the room because of a relatively high concentration of leaking refrigerant.

According to a thirteenth aspect, the controller is further configured to initiate a safety measure (second safety measure) upon receiving the signal indicating that a refrigerant leakage has been detected, wherein the safety measure comprises stopping the first and/or second fan motor and/or stopping a compressor of the heat pump and/or starting a pump down operation and/or outputting an alarm signal to a user.

Stopping the first and/or a second fan motor provides for the effect that no more leaking refrigerant is potentially fed into the room, particularly by the first airflow when the air conditioning heat exchanger is incorporated into the ventilation unit or the ducting of the ventilation unit. The second fan motor needs to be stopped in view of the international standard IEC 60335-2-40, but may in other applications also continue to operate exhausting any leaking refrigerant from the space at lower air flow rate.

Stopping the compressor of the heat pump avoids further refrigerant being pumped towards the leak and, hence, into the room.

A pump down operation enables pumping refrigerant from the components of the heat pump located within the room towards the outside of the room, particularly towards an outdoor unit of the heat pump. Thus, it can also be avoided that further refrigerant escapes through the leak into the room.

An alarm signal to the user ensures that the room may be evacuated in order to save lives due to high concentrations of leaking refrigerant in the room, fire and/or explosion.

According to a fourteenth aspect, the ventilation system further comprises a ventilation heat exchanger configured to exchange heat between air flowing in the first air passage and air flowing in the second air passage.

Thus, air extracted from the room (return air) may be used to preheat (during heating operation of the air conditioning system) or pre-cool (during cooling operation of the air conditioning system) the air introduced into the room (fresh air). Consequently, a more efficient system may be realized.

**Brief Description of the Drawings**

Figure 1 shows a schematic view of a ventilation system according to a first embodiment of the present disclosure;

Figure 2 shows a schematic diagram of a heat pump embodied in the ventilation system according to the first embodiment shown in figure 1;

Figure 3 shows a schematic view of a ventilation unit of the ventilation system according to the first embodiment shown in figure 1;

Figure 4 shows a schematic view of a ventilation system according to a second embodiment of the present disclosure;

Figure 5 shows a schematic view of a ventilation unit of the ventilation system according to the second embodiment shown in figure 4;

Figure 6 shows a graph with several curves each relating to a specific revolution speed of the fan motor or a specific DC voltage for driving said fan motor and showing the external static pressure as a function of the air flow rate;

Figure 7 shows a graph with several curves each relating to a specific revolution speed of the fan motor or a specific DC voltage for driving said fan motor and showing a power input as a function of airflow rate;

Figure 8 shows two diagrams illustrating, on the one hand, the pressure drop over a filter over time and, on the other hand the trend of the current over time;

Figure 9 shows a flowchart of a control of the first fan in accordance with the present disclosure; and

Figure 10 shows a flowchart of the control of the second fan in accordance with the present disclosure.

**Detailed Description**

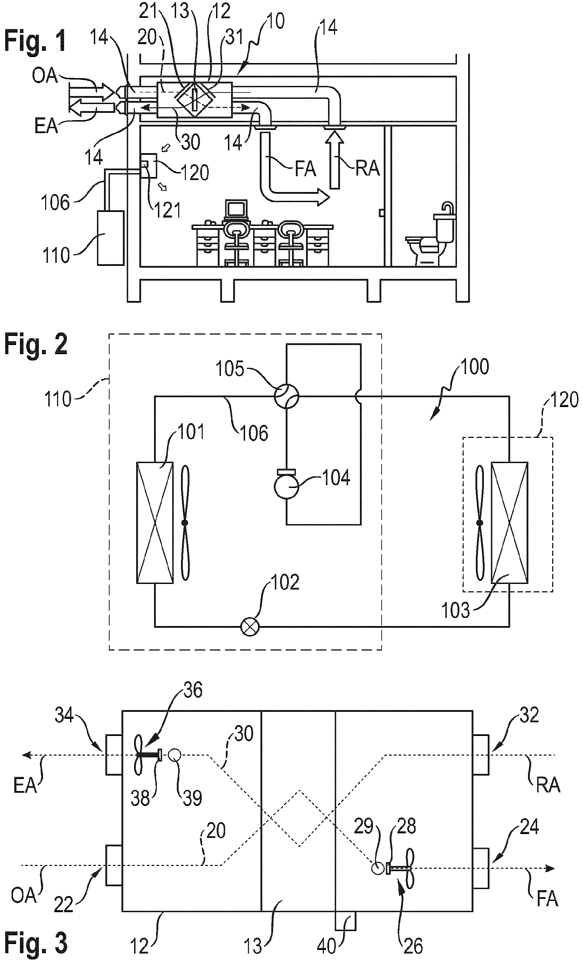

Figure 1 shows a schematic view of an installed ventilation system according to a first embodiment of the present disclosure. The shown ventilation system may be a VAC or even HVAC system.

The ventilation system is installed in a room, and may e.g. be installed in an office building, for exchanging used inside air of a room with fresh outside air.

The ventilation system comprises a ventilation unit 10 (schematically shown in figure 3). The ventilation unit 10 may be arranged in the ceiling above the room to be ventilated.

The ventilation unit 10 may have a housing 12. The housing 12 defines a first air passage 20 having a first air inlet 22 and a first air outlet 24. A first fan 26 is configured to induce a first airflow from the first air inlet 22 through the first air passage 20 to the first air outlet 24. The first fan 26 has a first fan motor 28. The first fan motor 28 is a DC-motor. The first fan 26 may be accommodated in the housing 12, particularly the first air passage 20. Alternatively, the first fan 26 may be incorporated in ducting 14 respectively connected to the first air inlet 22 and/or the first air outlet 24.

The ventilation system introduces outdoor air OA via the first air inlet 22, the first air passage 20 and the first air outlet 24 into the inside of the room as fresh air FA.

The housing 12 further defines a second air passage 30 having a second air inlet 32 and a second air outlet 34. A second fan 36 is configured to induce a second airflow from the second air inlet 32 through the second air passage 30 to the second air outlet 34. The second fan 36 has a second fan motor 38. The second fan motor 38 is a DC-motor. The second fan 36 may be accommodated in the housing 12, particularly the second air passage 30. Alternatively, the second fan 36 may be incorporated in ducting 14 respectively connected to the second air inlet 32 and/or the second air outlet 34.

The ventilation system exhausts return air RA from the room via the second air inlet 32, the second air passage 30 and the second air outlet 34 outdoors as exhaust air EA.

When the ventilation unit 10 is installed as shown e.g. in figure 1, the first and second air inlet 22, 32 and the first and second air outlet 24, 34 may respectively be connected to the ducting 14.

In order to additionally provide air conditioning (cooling and/or heating) to the room, the ventilation system may be combined with a heat pump 100. The most general circuit diagram of a heat pump is shown in figure 2.

The heat pump 100 comprises, connected in a refrigerant circuit (loop) by refrigerant lines 106, a heat source side heat exchanger (e.g. outdoor heat exchanger) 101, and expansion mechanism 102, e.g. an expansion valve, a utilization side heat exchanger 103 (air conditioning heat exchanger or indoor heat exchanger) and a compressor 104. In order to switch between heating and cooling operation and/or between cooling and defrosting operation, a switching mechanism 105, such as a 4-Way valve may be provided.

The heat source side heat exchanger 101, the expansion mechanism 102, the compressor 104 and the switching mechanism 105 may be provided in an outdoor unit 110 or heat source side unit, whereas the utilization side heat exchanger 103 is part of an indoor unit 120 or utilization side unit.

Referring again to figure 1 and the first embodiment, the utilization side heat exchanger 103 is arranged as indoor unit 120 inside the room for cooling and/or heating. Thus, a VAC or HVAC system is realized together with the ventilation unit 10.

Further, the described embodiment uses a flammable refrigerant, i.e. refrigerant classified as class A2L, A2 or A3 according to ISO 817, in particular A2L refrigerants such as R32 are used. As those refrigerants may cause fire hazards and/or hazards caused by an explosive atmosphere, the indoor unit 120 comprises a refrigerant leakage detection sensor 121 capable of detecting a leakage of refrigerant from any of the components of the refrigerant circuit (heat pump) arranged inside the room. As will be described later, a signal indicating a refrigerant leakage may be output by the refrigerant leakage detection sensor 121 and be transferred to a controller 40 (see figure 3) of the ventilation system.

The controller 40 may be installed in or on the housing 12. The controller 40 is configured to control the revolution speed of the first fan motor 28 and the second fan motor 38 independent from each other and/or switch the first fan 26 and the second fan 36 between the ON and OFF states independent from each other.

For heat recovery purposes, the ventilation unit 10 comprises a heat recovery heat exchanger (ventilation heat exchanger) 13. The ventilation heat exchanger 13 may be a paper heat exchanger. The first and second airflow passages 20, 30 share the heat exchanger 13 as one common heat exchanger 13 (ventilation heat exchanger). The airflows in both airflow passages 20, 30 pass the heat exchanger 13 so that heat is transferred between the two airflows. More particularly, if the room is heated by the heat pump 100, the air flow flowing through the second air passage 30 transfers heat to the air flow flowing through the first air passage 20 in the heat exchanger 13. To the contrary, if the room is cooled by the heat pump 100, the air flow flowing through the second air passage 30 transfers cold to the air flow flowing through the first air passage 20 in the heat exchanger 13 or to put it differently, the air flow flowing through the first air passage 20 transfers heat to the air flow flowing through the second air passage 30. Thereby, it becomes possible to use the heat/cold of the used inside air, which is exhausted to the outside, for (pre)heating/(pre)cooling the supplied outside air, i.e. the fresh air.

In order to prevent the ventilation heat exchanger 13 from being clogged by particulate matter, a first air filter 21 is disposed within the first air passage 20 upstream of the heat exchanger 13 with respect to the air flow in the first air passage 20 and a second air filter 31 is disposed within the second air passage 30 upstream of the heat exchanger 13 with respect to the air flow in the second air passage 30. Arranging the air filters 21, 31 upstream of the heat exchanger 13 is an example only and they can also be arranged downstream of the heat exchanger 13. Further, optional filters can be arranged inside the airflow passages 20, 30. Thus, there can be filters upstream of and downstream of the heat exchanger 13. The filters can also be positioned at the inlets 22, 32 of the housing 12, instead of close to (adjacent) the heat exchanger 13.

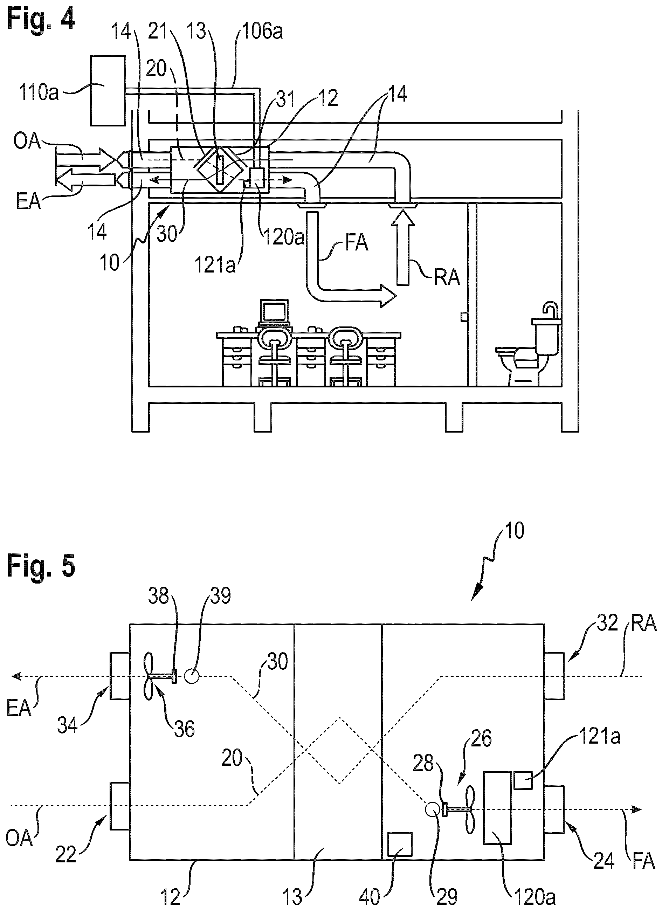

A second embodiment of the ventilation system is shown in figures 4 and 5. The same or similar reference numerals indicate the same or similar elements as in the first embodiment and a description of these elements is omitted in order to avoid repetition. Rather only the differences of the second embodiment as compared to the first embodiment is explained in the following.

Rather than embodying the air conditioning system, i.e. the heat pump 100, separately from the ventilation unit 10, the second embodiment integrates the air conditioning system into the ventilation unit 10. In particular, the utilization side heat exchanger 103 (air conditioning heat exchanger) is integrated as utilization side unit 120a in the housing 12 of the ventilation unit 10. Alternatively, the unit 120a may be integrated in the ducting 14 connected to the first air outlet 24. Consequently, also the refrigerant leakage detection sensor 121a is arranged adjacent to the air conditioning heat exchanger 103 in or at the unit 102a.

As in the first embodiment, the unit 120a is also connected to the outdoor unit 110a by refrigerant lines 106a. The remainder of the refrigerant circuit is configured as shown in figure 2 as is the rest of the ventilation unit 10.

The revolution speed of the fans is selected during installation of the ventilation system taking user requirements, the actual ducting and/or the setup of the ventilation system into account.

During normal operation of the ventilation system, a user may select between a "Low" mode, a "Medium" mode and a "High" mode. Alternatively, only two modes may be selected (Low and High). During each of the modii, the revolution speed of the fan remains constant. Yet, the revolution speed of the fans may be increased during safety operation as described below.

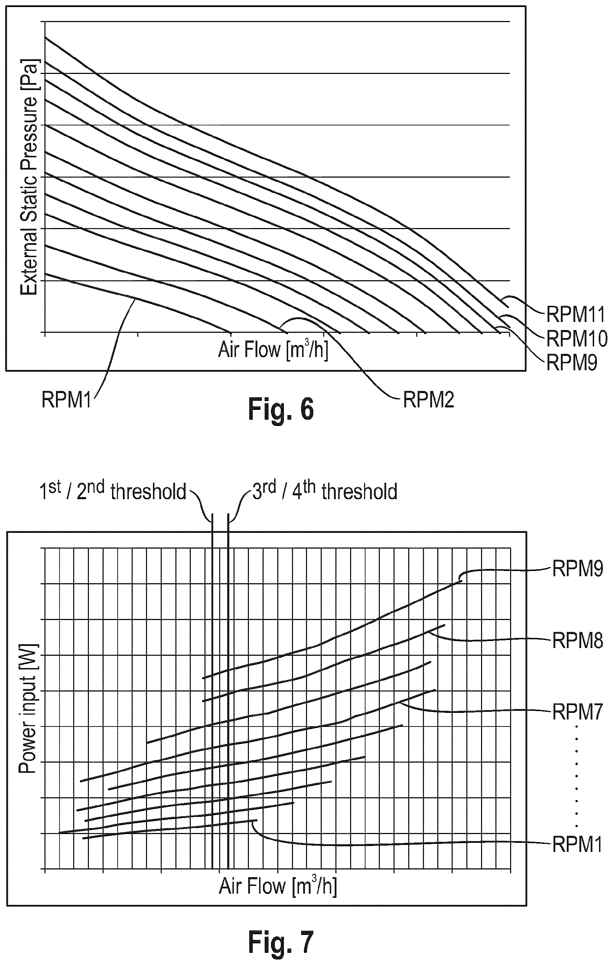

During development of the ventilation unit/system, airflow rate vs power input of the fans 26, 36 vs external static pressure graphs for a complete range of possible revolution speeds (RPMs) of the respective fans 26, 36 were created from actual measurements for each unit as shown in figures 6 and 7.

Figure 6 shows a graph of one of the fan motors 28, 38 with several curves (RPM 1 to RPM 11) each for a specific revolution speed of a fan motor (or in alternative embodiments in which the respective curves represent the DC voltage, a specific DC voltage for driving said fan motor) having external static pressure (ESP) as a function of air flow rate. These curves are determined at a certain temperature (reference or standard temperature) and with a certain degree of filter contamination. This can be with clean filters 21, 31, or with partially contaminated filters 21, 31.

In this context, "external static pressure" is the measurement of all the resistance in the duct system that the fan has to work against. Examples are filters, grills, A/C coils and heat exchangers as well as the ductwork. It is the sum of the suction pressure (negative) and discharge pressure (positive) created by the fan. Usually, external static pressure is measured using a manometer and is expressed in inches of water column.

The air flow rate (air flow) of a fan motor at constant rpm is directly related to the external static pressure. The higher the external static pressure, the lower the air flow rate and vice versa. The graph in figure 6 is used at the time of installation as the external static pressure is a factor dependent on the setup of the ventilation system in the field. In particular, the installer measures the external static pressure of the ventilation system. Based on the measured external static pressure, one may draw a conclusion on the required revolution speed (or DC voltage) to achieve a desired airflow. Hence, the installer may derive the respective revolution speed (or DC voltage) necessary to obtain the desired airflow for e.g. the "High", "Medium" and "Low" mode from figure 6. To put it differently, one may conclude on the airflow of the ventilation system depending on the measured external static pressure and, thereby on the power input to the fan motors necessary to achieve this airflow.

Figure 7 shows a graph of one of the fan motors 28, 38 with several curves (RPM 1 to RPM 9) each for a specific revolution speed of a fan motor 28, 38 (or in alternative embodiments in which the respective curves represent the DC voltage, a specific DC voltage for driving said fan motor) having power input as a function of air flow rate. These curves are determined at a certain temperature (reference or standard temperature) and with a certain degree of filter contamination. This can be with clean filters, or with partially contaminated filters.

The graph clearly shows that the air flow rate is directly proportional to the power input. During installation of the ventilation system the results of Figure 6 are used to determine the revolution speed required to achieve the desired air flow rate for the modii "Low", "Medium" and "High". During this determination, a respective curve in Figure 7 is corresponded to the revolution speed of the respective mode (e.g. RPM 1 = Low, RPM 4 = Medium, RPM 7 = High). At the time of normal operation of the ventilation system, depending on the selected mode, one of the curves in figure 7 is followed by the fans 26, 36. This RPM curve is considered the predetermined revolution speed (or in alternatives embodiments in which the respective curves represent the DC voltage, the predetermined DC voltage).

Then the power input/current input/resistance of the fan motor 28, 38 is measured, optionally a temperature influence is corrected, and an air flow rate can be determined based on the chosen curve of figure 7..

In order to ensure a minimum airflow rate for the circulation airflow (i.e. the first air flow through the first air passage 20 into the room) the international standard IEC 60335-2-40 had to be considered requiring

- a minimum circulation airflow of 240 m$^3$/h (see GG.10.2.1 of IEC 60335-2-40)
- a minimum mechanical ventilation airflow of

$$Q = \frac{10}{0,25 \times LFL}$$

(Formula GG.31 of IEC 60335-2-40) and wherein LFL is the lower flammability limit in kg/m$^3$. For R32 the LFL is 0.307 kg/m$^3$. Thus, the minimum mechanical ventilation airflow is app. 130 m$^3$/h.

Yet, when designing the ventilation unit 10, different circumstances need to be taken into account. For example, the ventilation unit 10 may be used in different configurations such as in combination with a separate air conditioning (figure 1) or an integrated air conditioning (figure 2). Moreover and under certain circumstances, the density of the air flow changes (which particularly occurs during cooling operation with respect to the first air flow passing through the first airflow passage 20 and being supplied to the room as fresh air). Those parameters were considered in determining the threshold for the minimum airflow rate in the first air passage 20 and the second air passage 30 as shown in the below exemplary table.

| | Cooling operation | | Heating operation | |
|---|---|---|---|---|
| | first airflow | second airflow | first airflow | second airflow |
| ESP of AC HEX 102a | Y | N | Y | N |
| Wet AC HEX 102a | Y | N | N | N |
| Change in density | Y | N | N | N |
| Internal leakage | Y | Y | Y | Y |
| Wet paper ventilation HEX | N | N | N | Y |
| Margin | Y | Y | Y | Y |
| Required minimum airflow rate according to IEC 60335-2-40 (m$^3$/h) | 240 | 130 | 240 | 130 |
| **Threshold airflow rate (m$^3$/h)** | **277** | **142** | **262** | **200** |

With respect to the above table, "Y" means that this is an issue for the respective airflow and in the respective operation mode, whereas "N" means that it is not an issue for the respective airflow and in the respective operation mode.

Considering the parameters in the table, a minimum airflow rate of 277 m$^3$/h of the first airflow through the first airflow passage 20 and a minimum airflow rate of 200 m$^3$/h of the second airflow through the second airflow passage 30 was determined as the desired minimum airflow rates and as a basis for determining the thresholds for the electrical current/power/resistance.

Based on the graphs in figures 6 and 7 computed at the time of installing the ventilation system, respective thresholds can be determined to realize the above minimum airflow rates for each revolution speed (rpm) of the fan. To put it differently and considering figure 7, an air flow rate of 277 m$^3$/h for the airflow into the room (fresh air) and air flow rate of 200 m$^3$/h for the area being ventilated from the room (return air) is respectively selected as minimum airflow rate (see line first/second threshold in figure 7). Thus, depending on the revolution speed of the fan, the first/second threshold is the minimum first/second air flow rate and is associated to a respective power input (alternatively the current input or resistance) at a respective revolution speed of the respective fan motor.

During normal operation, the revolution speed is fixed based on the circumstances of the system and requirements of the user. In particular, depending on the selected mode, one of the curves in figure 7 is followed by the fans 26, 36 (predetermined revolution speed (rpm)).

During normal operation, the revolution speed may be increased by the controller 40 to compensate for an increase in the external static pressure during use due to e.g. dirty filters/heat exchangers as described in EP 3 489 592 A1. In this case, the curve in Figure 7 corresponding to the increased revolution speed is followed by the fans and considered as the predetermined revolution speed (rpm).

Hence, the ventilation system, particularly the controller 40, selects a power input curve in figure 7 depending on the actual (current) revolution speed of the respective fan motor.

Moreover, further thresholds may be determined (third and fourth thresholds in figure 7) at a higher airflow rate and as well associated to the respective revolution speeds of the fan motors 28, 38.

During operation, the electrical power, the electrical current or the electrical resistance of the fan motors 28 and 38 is measured.

In order to allow for a temperature correction in the determination of the actual airflow, first and second temperature sensors 29, 39 are respectively associated to the first fan motor 28 and the second fan motor 38. The temperature sensors 29, 39 may be configured to measure the temperature of the fan motors 28, 38 or of the air flow in the first and second air passage, 20, 30, respectively. If the temperature, e.g. the outside temperature, is low, e.g. in winter about 5°C, the density of the air is higher, a higher fan power is needed at a constant revolution speed of the fan to maintain the same air flow rate. To put it differently, if the density of the air is higher, higher torque is necessary. The same is true if considering high temperatures, e.g. the outside temperature, in the summer, e.g. 46°C, the density of the air is lower and a lower fan power is needed at a constant revolution speed of the fan to maintain the same air flow rate. Hence, a correction to a reference temperature, e.g. room temperature such as 20°C, may be added to attend to this phenomenon. To put it differently, a correction value is added to or subtracted from the measured electrical power and/or the electrical current and/or the electrical resistance of the respective fan motor 28, 38 depending on the temperature measured by the temperature sensors 29, 39.

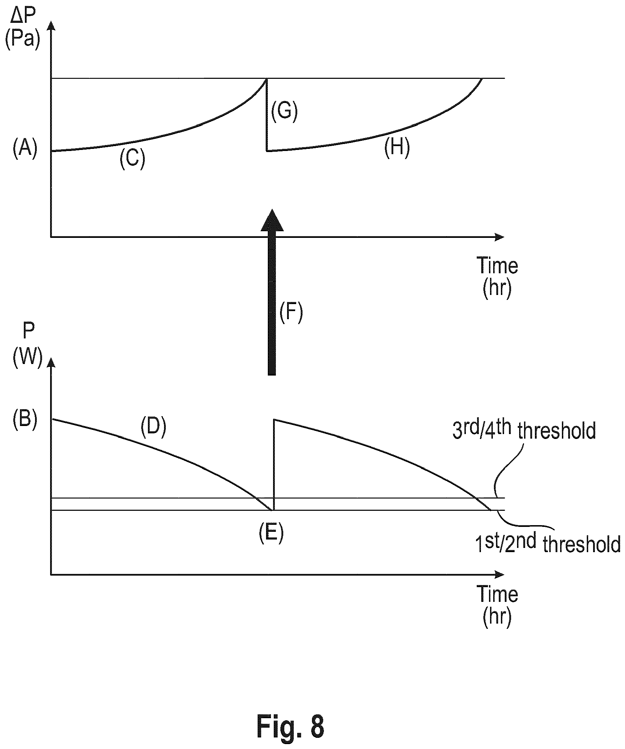

This measured value of the electrical power, the electrical current or the electrical resistance is then, in the controller 40, compared with the respective electrical power, the electrical current or the electrical resistance corresponding to the thresholds on the relevant RPM curve in figure 7 as will be explained with reference to figure 8. To put it differently, the obtained power input is in the controller 40 input in their respective RPM curve in figure 7 and if the input (point on the curve) falls below the third/fourth or first/second threshold line, a safety measure is initiated.

At the start of the ventilation system and during operation a certain external static pressure (pressure drop ΔP) exists (Point (A)). At this point (A), the electrical power(W) (alternatively the electrical current or the electrical resistance) is measured corresponding to Point (B). The electrical power may be measured continuously or in predetermined intervals.

An increase of the external static pressure may in operation be caused during use by dirty filters.

Further and under cold weather conditions, the ventilation heat exchanger 13 may become wet, whereby the resistance in the air passages 20, 30 increases.

Also, the air conditioning heat exchanger 103 may become wet due to condensation water being formed on the air conditioning heat exchanger 103 during cooling operation. Thus, with respect to the second embodiment described with respect to figures 4 and 5 in which the air conditioning heat exchanger 103 is incorporated into the housing 12, particularly the second air passage 20 or the respective ducting 14, also this increase of resistance and, hence, external static pressure has to be considered with respect to the air flow rate induced by the second fan 26. Also, the air conditioning heat exchanger 103 as such increases the external static pressure as compared to a system in which the air conditioning heat exchanger 103 is provided separately from the ventilation unit 10 (as shown in figure 1).

Generally speaking, the ESP increases over time (compare Curve (C)). This has an impact on the electrical power of the fan motor, which decreases over the time (see curve (D)).

Once the measured power falls below a value corresponding to a third/fourth threshold (also compare figure 7), a warning may be output to the user for example by showing a warning on the remote control of the ventilation system. The upper line in figure 8 actually corresponds to the power input value in figure 7 at which the third/fourth threshold intersects with the respective RPM curve of the fan motor. This power input value may as well be named third/fourth threshold.

As soon as the first/second threshold is reached (POINT (E)), the revolution speed of the respective fan 26, 36 is increased to increase the air flow rate (Point (G)). The lower line in figure 8 actually corresponds to the power input value in figure 7 at which the first/second threshold intersects with the respective RPM curve of the fan motor. This power input value may as well be named first/second threshold.

Subsequently, the process is repeated.

Once a new revolution speed has been set, also a new RPM curve is selected in figure 7 so that the relevant power input (alternatively current input or resistance) associated to the first/second threshold changes. If the relevant power input is named first/second threshold, this threshold changes though the set minimum first/second airflow rate does not change. The same of course also applies to the relevant power input (alternatively current input or resistance) associated to the third/fourth threshold once a new revolution speed has been set for the fans 26, 36. If the relevant power input is named third/fourth threshold, this threshold changes in accordance with the change of the first/second threshold.

If, however, at the point (E) the maximum revolution speed of the respective fan 26, 36 has already been reached, an error signal is output to the user, e.g. to the remote control of the ventilation system.

The above described process applies to either one of the fans 26, 36 and is, thus, only described once.

It is to be understood, the pressure drop caused by the air conditioning heat exchanger is only relevant for the first fan 26 and only in case the air conditioning heat exchanger is integrated into the ventilation unit as shown in figures 4 and 5 or into the ducting of the ventilation system (not shown).

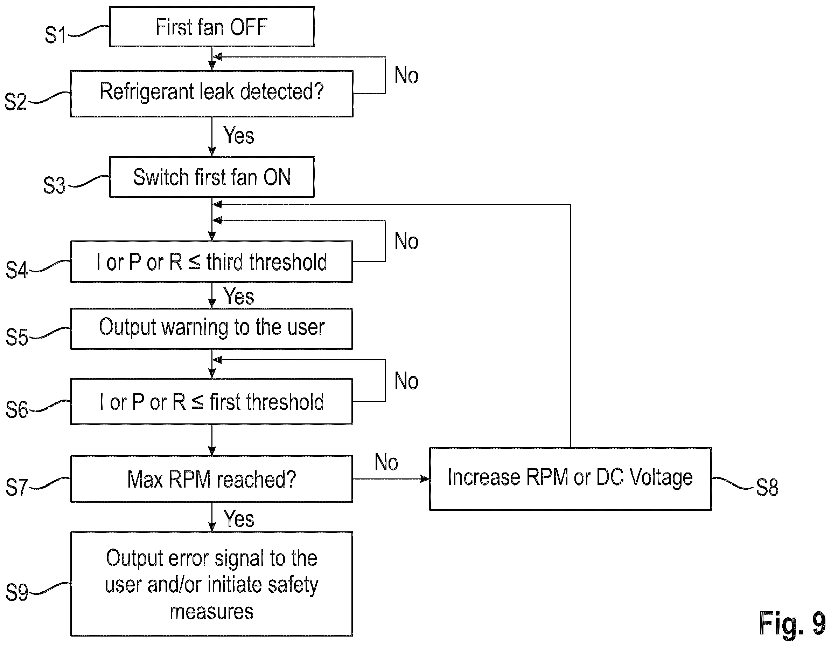

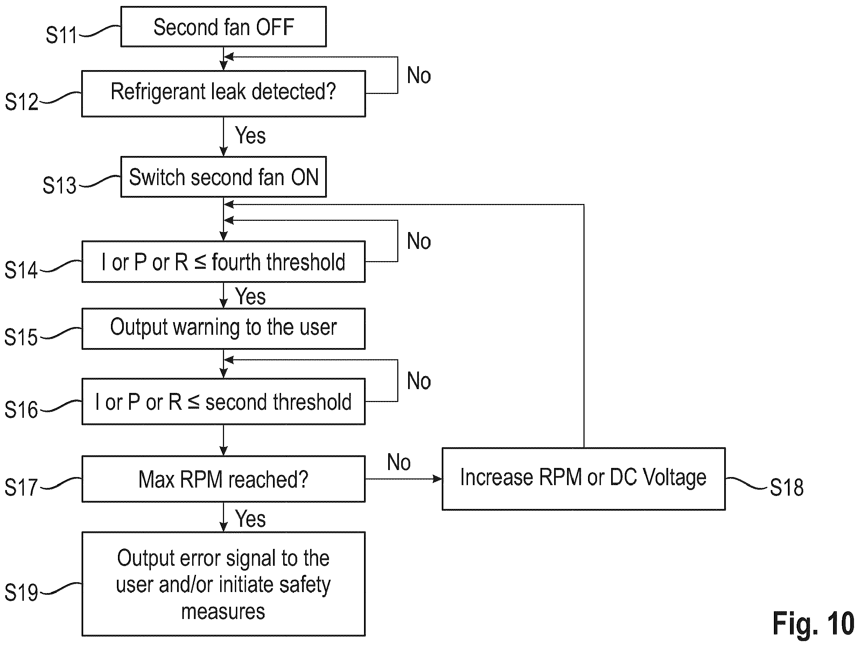

In the following, a control logic performed in the controller 40 is described with respect to the first and second fan 26, 36 with respect to figures 9 and 10. Yet, as the control logic is the same for both fans 26, 36, only one of the logics will be described in the following. It is, however, to be understood that the description applies to both logics.

In principle, there are two circumstances or modes of operation that may occur.

In a first mode, the first and second fan are in an ON state. In the configuration in figure 4 in which the air conditioning heat exchanger is integrated into the ventilation unit 10, it is difficult for the refrigerant leakage detection sensor 121a to detect a refrigerant leak because of the relatively high airflow induced by the first fan 26 flowing through the air conditioning heat exchanger 103. Due to the continuous airflow, the leaking refrigerant will not concentrate around the refrigerant leakage detection sensor 121a and no leak can be detected. If this is the current mode of operation, the control logic starts only with step S4/S14.

In a second mode, the first and second fan are in an OFF state. In this case, the logic starts at step S1/S11.

In this case, if a refrigerant leak is detected by the refrigerant leakage detection sensor 102, 102a a corresponding signal is output to the controller 40. If the controller 40 receives the signal that a refrigerant leak has been detected, the first and second fans 26, 36 are switched on (step S3/S13).

Subsequently and as also described with respect to figure 8, the electrical current, the electrical power or the electrical resistance of the first fan motor 28 and the second fan motor 38 is measured continuously or in predetermined intervals. The measured value is then compared in the controller 40 with the values corresponding to the previously determined third threshold (step S4) or fourth threshold (step S14), respectively.

In case the measured value is equal to or lower than the value corresponding to the third threshold/fourth threshold, a warning is output to the user, e.g. to the remote control of the ventilation system and/or the air conditioning system. Next, the controller continues to measure and compare the electrical current, the electrical power or the electrical resistance of the first fan motor 28 and the second fan motor 38. In case the measured value is equal to or lower than the values corresponding to the first threshold/second threshold (step S6/S16), the controller verifies whether the maximum revolution speed of the respective fan 26, 36 has already been reached (step S7/S17).

If the maximum revolution speed of the respective fan 26, 36 has not been reached, the revolution speed or the DC voltage, resulting in an increased revolution speed, is increased (step S8/S18). Additionally, the logic selects the RPM curve in figure 7 corresponding to the set (new) revolution speed so that the power input values corresponding to the first/second and third/fourth thresholds change. Subsequently, the control logic returns to step S4/S14.

If the maximum revolution speed of the respective fan 26, 36 has been reached, an error signal is output to the user, e.g. to the remote control of the ventilation system and/or the air conditioning system. Alternatively or in addition thereto further safety measures are taken including but not limited by

- stopping the first and/or second fan motor
- stopping the compressor 104 of the heat pump 100
- starting a pump down operation in which refrigerant in the refrigerant circuit is pumped away from the unit 120, 120a and towards the outdoor unit 110.

The present disclosure enables an easy way to maintain a desired minimum air flow rate for ventilating (circulation and mechanical ventilation) a room vulnerable to leaking flammable refrigerant.

**Claims**

1. A ventilation system for a room, the ventilation system comprising:

   a first air passage (20) having a first air inlet (22) and a first air outlet (24);
   a first fan (26) configured to induce a first air flow from the first air inlet (22) through the first air passage (20) to the first air outlet (24), the first fan (26) having a first fan motor (28); and
   a controller (40) for controlling the ventilation system; wherein the controller (40) is configured to execute a safety operation

       i) when the first fan motor (28) is in an ON state and/or
       ii) when the controller (40) receives a signal indicating that a refrigerant leakage has been detected,

   wherein the controller (40) is configured to, in the safety operation,

       a) obtain, of the first fan motor (28), the electrical power and/or the electrical current and/or the electrical resistance during operation of the first fan motor (28) at a predetermined revolution speed or a predetermined DC voltage of the first fan motor (28);
       b) compare the obtained electrical power and/or the electrical current and/or the electrical resistance of the first fan motor (28) with a first threshold, wherein the first threshold is a predetermined threshold associated to a set minimum first air flow rate through the first air passage (20) ;
       c) initiate a measure when the obtained electrical power and/or the electrical current and/or the electrical resistance of the first fan motor (28) falls below the first threshold.

2. Ventilation system according to claim 1, wherein the measure comprises increasing the revolution speed or the DC voltage of the first fan motor (28) so that the obtained electrical power and/or the electrical current and/or the electrical resistance of the first fan motor (28) exceeds the first threshold.

3. Ventilation system according to claim 1 or 2, wherein the minimum first air flow rate is at least 240 $m^3$/h.

4. Ventilation system according to any one of the preceding claims, wherein a third threshold higher than the first threshold is set and the controller (40) is further configured to output a warning to the user when the obtained electrical power and/or the electrical current and/or the electrical resistance of the first fan motor (28) falls below the third threshold.

5. Ventilation system according to any one of the preceding claims, wherein the ventilation system further comprises:

   a second air passage (30) having a second air inlet (32) and a second air outlet (34);
   a second fan (36) configured to induce a second air flow from the second air inlet (32) through the second air passage (30) to the second air outlet (34), the second fan (36) having a second fan motor (38);
   wherein the controller (40) is further configured to execute the safety operation
   iii) when the second fan motor (38) is in an ON state, wherein the controller (40) is configured to, in the safety operation,

       a) obtain, of the second fan motor (38), the electrical power and/or the electrical current and/or the electrical resistance during operation of the second fan motor (38) at a predetermined revolution speed or a predetermined DC voltage of the second fan motor (38),
       b) compare the obtained electrical power and/or the electrical current and/or the electrical resistance of the second fan motor (38) with a second threshold, wherein the second threshold is a predetermined threshold associated to a set minimum second air flow rate through the second air passage (30),
       c) initiate a measure when the obtained electrical power and/or the electrical current and/or the electrical resistance of the second fan motor (38) falls below the second threshold.

6. Ventilation system according to claim 5, wherein the measure comprises increasing the revolution speed or the DC voltage of the second fan motor (38) so that the obtained electrical power and/or the electrical current and/or the electrical resistance of the second fan motor (38) exceeds the second threshold.

7. Ventilation system according to claim 5 or 6, wherein the minimum second air flow rate is at least 130 m$^3$/h.

8. Ventilation system according to any one of claims 5 to 7, wherein a fourth threshold higher than the second threshold is set and the controller (40) is further configured to output a warning to the user when the obtained electrical power and/or the electrical current and/or the electrical resistance of the second fan motor (38) falls below the fourth threshold.

9. Ventilation system according to any one of the preceding claims, wherein the measure comprises outputting an error signal to a user.

10. Ventilation system according to any one of the preceding claims, further comprising an air conditioning heat exchanger (103) connected to a refrigerant circuit of a heat pump (100) and configured to exchange heat between the refrigerant and air to be supplied to the room and a refrigerant leakage detection sensor (121, 121a) arranged in the vicinity of the air conditioning heat exchanger (103), the refrigerant leakage detection sensor (121, 121a) being configured to detect refrigerant leaking from the refrigerant circuit and outputting the signal indicating that a refrigerant leakage has been detected.

11. Ventilation system according to claim 10 and any one of claims 5 to 9, wherein the first air flow is a fresh air flow and the second air flow is a return air flow, wherein the air conditioning heat exchanger (103) is connected to the first air passage (20) and configured to exchange heat between the refrigerant and the fresh air flow as air to be supplied to the room.

12. Ventilation system according to any one of the preceding claims, wherein the controller (40) is further configured to, if the first fan motor (28) and/or the second fan motor (38) are/is in an OFF state, start the first and/or the second fan motor (38) upon receiving the signal indicating that a refrigerant leakage has been detected and then execute the safety operation .

13. Ventilation system according to any one of the preceding claims, wherein the controller (40) is further configured to initiate a safety measure upon receiving the signal indicating that a refrigerant leakage has been detected, wherein the safety measure comprises stopping the first and/or second fan motor (38, 28) and/or stopping a compressor (104) of the heat pump (100) and/or starting a pump down operation and/or outputting an alarm signal to a user.

14. Ventilation system according to any one of the preceding claims, further comprising a ventilation heat exchanger configured to exchange heat between air flowing in the first air passage (20) and air flowing in the second air passage (30) .

**Fig. 1**

**Fig. 2**

**Fig. 3**

**Fig. 4**

**Fig. 5**

Fig. 6

Fig. 7

ΔP
(Pa)

(A)

(C)

(G)

(H)

(F)

Time
(hr)

P
(W)

(B)

(D)

(E)

3rd/4th threshold

1st/2nd threshold

Time
(hr)

Fig. 8

S1 — First fan OFF

S2 — Refrigerant leak detected? — No

Yes

S3 — Switch first fan ON

S4 — I or P or R ≤ third threshold — No

Yes

S5 — Output warning to the user

S6 — I or P or R ≤ first threshold — No

S7 — Max RPM reached? — No — Increase RPM or DC Voltage — S8

Yes

S9 — Output error signal to the user and/or initiate safety measures

Fig. 9

```
S11 ──⟋⟍── ┌─────────────────────────┐
           │     Second fan OFF       │
           └─────────────────────────┘
                        │
                        ▼
S12 ──⟋⟍── ┌─────────────────────────┐ ──→ No
           │ Refrigerant leak detected? │
           └─────────────────────────┘
                        │ Yes
                        ▼
S13 ──⟋⟍── ┌─────────────────────────┐
           │   Switch second fan ON   │
           └─────────────────────────┘
                        │
                        ▼
S14 ──⟋⟍── ┌─────────────────────────┐ ──→ No
           │ I or P or R ≤ fourth threshold │
           └─────────────────────────┘
                        │ Yes
                        ▼
S15 ──⟋⟍── ┌─────────────────────────┐
           │  Output warning to the user │
           └─────────────────────────┘
                        │
                        ▼
S16 ──⟋⟍── ┌─────────────────────────┐ ──→ No
           │ I or P or R ≤ second threshold │
           └─────────────────────────┘
                        │
                        ▼
S17 ──⟋⟍── ┌─────────────────────────┐  No   ┌──────────────────────────┐
           │     Max RPM reached?      │ ────→ │ Increase RPM or DC Voltage │ ──⟋⟍── S18
           └─────────────────────────┘        └──────────────────────────┘
                        │ Yes
                        ▼
S19 ──⟋⟍── ┌─────────────────────────┐
           │  Output error signal to the │
           │  user and/or initiate safety │
           │         measures          │
           └─────────────────────────┘
```

**Fig. 10**

Europäisches
Patentamt

European
Patent Office

Office européen
des brevets

# EUROPEAN SEARCH REPORT

Application Number

**EP 21 19 9806**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2016 223643 A (DAIKIN IND LTD) 28 December 2016 (2016-12-28) * paragraphs [0007], [0010], [0011], [0015], [0016], [0037]; figure 1 * ----- | 1-14 | INV. F24F11/00 F24F11/77 F24F11/36 F24F1/0003 F24F12/00 |
| Y | WO 2021/065571 A1 (DAIKIN IND LTD [JP]) 8 April 2021 (2021-04-08) * the whole document * ----- | 1 | |
| Y | EP 3 859 223 A1 (DAIKIN IND LTD [JP]) 4 August 2021 (2021-08-04) * the whole document * ----- | 1 | |
| Y,D | EP 3 489 592 A1 (DAIKIN EUROPE NV [BE]; DAIKIN IND LTD [JP]) 29 May 2019 (2019-05-29) * the whole document * ----- | 1-14 | |

| | |
|---|---|
| | **TECHNICAL FIELDS SEARCHED (IPC)** |
| | **F24F** |

The present search report has been drawn up for all claims

| Place of search | Date of completion of the search | Examiner |
|---|---|---|
| Munich | 22 February 2022 | Decking, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                               

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9806

This annex lists the patent family members relating to the patent documents cited in  the above-mentioned European search report.
The members are as contained in the European Patent Office EDP file on
The European Patent Office is in no way liable for these particulars which are merely given for the purpose of information.

22-02-2022

| Patent document cited in search report | | Publication date | Patent family member(s) | | Publication date |
|---|---|---|---|---|---|
| JP 2016223643 | A | 28-12-2016 | JP | 6572628 B2 | 11-09-2019 |
| | | | JP | 2016223643 A | 28-12-2016 |
| WO 2021065571 | A1 | 08-04-2021 | JP | 2021055922 A | 08-04-2021 |
| | | | WO | 2021065571 A1 | 08-04-2021 |
| EP 3859223 | A1 | 04-08-2021 | CN | 112789453 A | 11-05-2021 |
| | | | EP | 3859223 A1 | 04-08-2021 |
| | | | JP | 2020051736 A | 02-04-2020 |
| | | | US | 2021356154 A1 | 18-11-2021 |
| | | | WO | 2020067040 A1 | 02-04-2020 |
| EP 3489592 | A1 | 29-05-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3489592 A1